# EUROPEAN PATENT APPLICATION

(11) **EP 2 720 118 A1**
(43) Date of publication of application: **16.04.2014**
(21) Application number: 12187850.8
(22) Date of filing: 09.10.2012
(51) Int. Cl.: G06F 3/041, G06F 3/0354

(54) **Apparatus and method pertaining to testing a stylus communication path for interference**

(71) Applicant: BlackBerry Limited, Waterloo, ON N2K 0A7 (CA)
(72) Inventor: Singh, Amit Pal, Waterloo, Ontario N2L 3W8 (CA); Nandakumar, Rohan Michael, Waterloo, Ontario N2L 3W8 (CA)
(74) Representative: Hibbert, Juliet Jane Grace

(57) **Abstract**

An apparatus having a stylus scribing surface and a sensor configured to communicate with a stylus via a wireless communication path regarding a location of the stylus with respect to that stylus scribing surface also has a control circuit that operably couples to that sensor. The control circuit is configured to automatically test that wireless communication path for interference. In response to detecting an undue level of interference the control circuit instructs the stylus to modify the wireless communication path (for example, by switching to a different carrier frequency).

## Description

### Field of Technology

The present disclosure relates to interacting with styli that serve as user-input interfaces for electronic devices.

### Background

Stylus-based user interfaces are known in the art. Generally speaking, a stylus is typically a hand-held writing utensil that often (but not exclusively) has a pencil-like elongated form factor and that includes at least one pointed end configured to serve as a writing tip by interacting with a scribing surface. Using a stylus as an input mechanism with a display offers a variety of advantages over a fingertip including the opportunity for increased precision as well as an expression modality that accords with the user's own past experience with a pencil or pen.

In some cases the stylus comprises an active device that transmits a signal using a radio-frequency carrier. This signal serves, for example, as a location beacon that the display device utilizes, for example, to confirm the proximity of the stylus and/or to facilitate accurate tracking of the stylus's movement with respect to the scribing surface. To conserve power, such a stylus typically only transmits such a signal on an intermittent basis. In some cases the stylus may also transmit, as a part of the aforementioned location beacon or otherwise in common with the transmitted signal, other information such as information regarding sensed pressure on the stylus's scribing tip and/or information regarding the assertion state of one or more user-assertable buttons on the stylus.

Unfortunately, intermittent interference can impair transmissions at the operative frequency of the radio-frequency carrier. Such interference, in turn, can render use of the stylus impaired or even wholly unavailable for use. Such a circumstance can then lead to user dissatisfaction.

### Brief Description of the Drawings

FIG. 1 is a perspective view in accordance with the disclosure.

FIG. 2 is a block diagram in accordance with the disclosure.

FIG. 3 is a flow diagram in accordance with the disclosure.

FIG. 4 is a timing diagram in accordance with the prior art.

FIG. 5 is a timing diagram in accordance with the disclosure.

FIG. 6 is a timing diagram in accordance with the disclosure.

FIG. 7 is a timing diagram in accordance with the disclosure.

### Detailed Description

The following describes an apparatus and method pertaining to an apparatus having a stylus scribing surface, a sensor configured to communicate with a stylus via a wireless communication path regarding a location of the stylus with respect to that stylus scribing surface, and a control circuit that operably couples to that sensor. The control circuit is configured to automatically test that wireless communication path for interference. In response to detecting an undue level of interference the control circuit instructs the stylus to modify the wireless communication path (for example, by switching to a different carrier frequency).

By one approach, the control circuit tests the wireless communication path for interference during communication nulls for the stylus. If desired, the control circuit can be further configured to first conclude a quiescent-state window that precedes such a test. These teachings will also accommodate, if desired, testing the wireless communications path for interference while simultaneously monitoring the stylus scribing surface for finger-based contact.

By one approach the control circuit instructs the stylus to modify the wireless communication path by using a short-range wireless transmission (such as, but not limited to, a Bluetooth^{™}-compatible transmission).

So configured, such an apparatus can determine when a stylus employs a communication channel that suffers from interference and respond by causing the stylus to switch, for example, to a different communication channel. Such an approach, in turn, can help to ensure continued effective use of the stylus for its intended purpose in a manner that is wholly transparent to the user. Accordingly, these teachings can contribute to the efficacy of stylus-based platforms and to the experiential satisfaction of persons who use such platforms.

These teachings are highly flexible in practice and can be successfully employed with a wide variety of stylus-based wireless-communication technologies and methodologies. These teachings will also accommodate using any of a wide variety of responsive, curative reactions in the face of undue interference.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

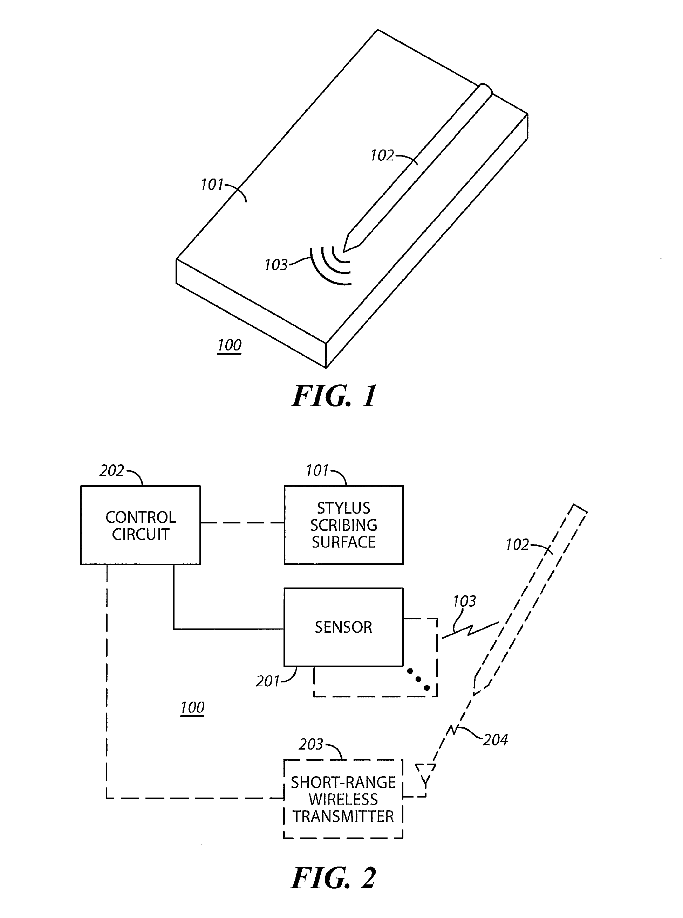

FIG. 1 presents an apparatus 100 (such as, but not limited to, a so-called smartphone or pad/tablet-styled computer) having a stylus scribing surface 101 that also constitutes, for the sake of a non-limiting example, a touch-sensitive display. A user-grasped stylus 102 comprises an active stylus that emits radio-frequency pulses via a corresponding wireless communication path 103 (comprising, for example, a particular carrier frequency). As stylus-detection system as comprises a part of the apparatus 100 communicates with the stylus 102 via that wireless communication path 103 by receiving those pulses and providing received-pulse information to a control circuit.

Referring now to FIG. 2, the control circuit 202, in turn, uses the received-pulse information to facilitate determining the location of the stylus 102 with respect to the stylus scribing surface 101. Various location-determining methodologies are known in the art. As the present teachings are not overly sensitive to any particular selections in these regards, further elaboration is not provided here for the sake of brevity.

This control circuit 202 can comprise a fixed-purpose hard-wired platform or can comprise a partially or wholly-programmable platform. These architectural options are well known and understood in the art and require no further description here. This control circuit 202 is configured (for example, by using corresponding programming as will be well understood by those skilled in the art) to carry out one or more of the steps, actions, and/or functions described herein.

If desired, this control circuit 202 can optionally couple to a memory (not shown). The memory may be integral to the control circuit 202 or can be physically discrete (in whole or in part) from the control circuit 202 as desired. This memory can serve, for example, to non-transitorily store the computer instructions that, when executed by the control circuit 202, cause the control circuit 202 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM)).

FIG. 2 also illustrates a sensor 201 that serves as the aforementioned stylus-detection system. Accordingly, in this illustrative example it is the sensor 201 that communicates with the stylus 102 via the wireless communications path 103 regarding the location of the stylus 102 with respect to the stylus scribing surface 101.

By one optional approach this apparatus 100 can further include a short-range wireless transmitter 203 that also operably couples to the control circuit 202. This short-range wireless transmitter 203 can comprise, for example, a Bluetooth^{™}-compatible wireless transmitter as is known in the art. These teachings will readily accommodate other choices in these regards, however. So configured, the apparatus 100 can transmit one or more signals or messages to a compatibly-configured stylus 102 via short-range wireless transmissions 204 as issued by the short-range wireless transmitter 203.

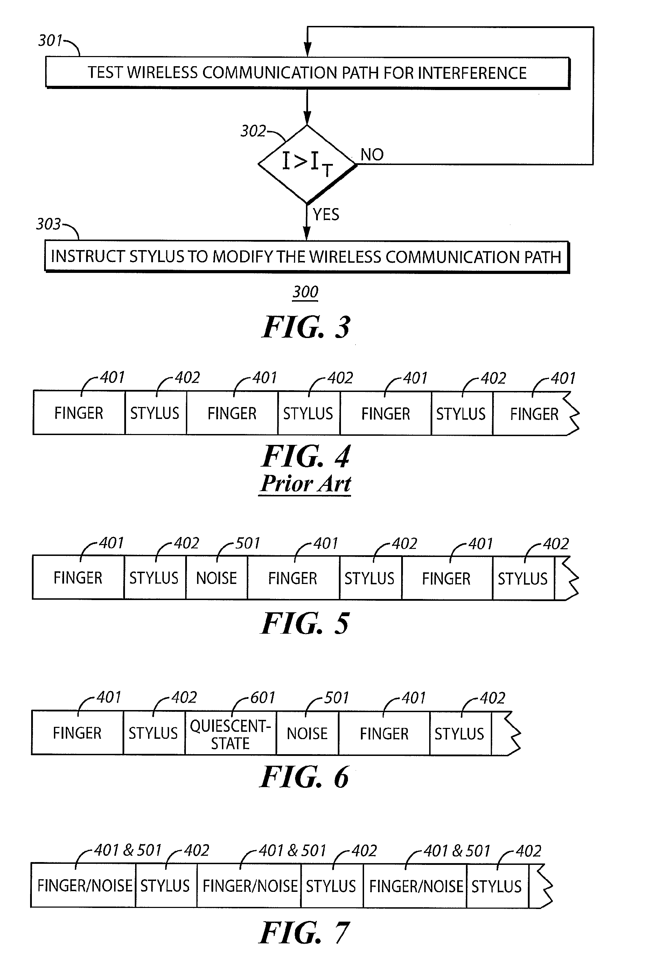

FIG. 3 presents a process 300 that can be carried out by such a control circuit 202 (for example, via appropriate corresponding programming as will be well understood by those skilled in the art). At step 301 of this process 300 the control circuit 202 uses the aforementioned sensor 201 to test the aforementioned wireless communication path for interference.

As mentioned above, some styli are configured to transmit their location information (such as the aforementioned pulses) on an intermittent basis in order to conserve power. By one approach, then, this step 301 of testing the communication path for interference is undertaken only during communication nulls for the stylus 102. So configured, the apparatus 100 only actively tests for interference at times when the stylus 102 is not transmitting its location-determination information. Such an approach can be useful as this approach can avoid misconstruing the stylus's own legitimate transmissions as interfering noise. There are various approaches known in the art that can be applied here in these regards whereby a receiver can become synchronized, at least to a reasonable extent, with the periodic transmissions of a transmitter of interest in order to avoid those transmissions per this approach.

Also as noted above, many such apparatuses are able to track the contact and movement of both a user's finger as well as a stylus 102. As illustrated in FIG. 4, such an approach often entails interleaving finger-detection activity 401 with stylus-detection activity 402 on a repeating basis. With slight modifications the present teachings are readily employed in such an application setting.

As one example in these regards, and as illustrated in FIG. 5, the aforementioned noise-detection activity 501 can be interleaved with such finger-detection activity 401 and stylus-detection activity 402. The frequency at which the noise-detection activity 501 occurs can vary as desired. By one approach the noise-detection activity 501 can occur one-for-one with each stylus-detection activity 402. By another approach the noise-detection activity 501 may occur considerably less often. This might comprise, for example, conducting the noise-detection activity 501 only once every 0.5 seconds, or 1.0 seconds, or 5.0 seconds, or such other period of time as may be useful in a given application setting.

As another example in these regards, and as illustrated in FIG. 6, the noise-detection activity 501 only occurs immediately following a quiescent-state window 601 that accordingly precedes the aforementioned testing. Such a quiescent-state window 601 can serve, for example, to ensure that all transmissions of the stylus 102 have concluded and that the stylus's transmitter and other sources of interference have fully quieted (or at least have quieted to a considerable extent). This quieting opportunity, in turn, can help to ensure the veracity of the interference testing results.

And as yet another example in these regards, and as illustrated in FIG. 7, by one approach the noise-detection activity 501 can occur, partially or wholly, while simultaneously monitoring the stylus scribing surface 101 for finger-based contact 401 as well. Such an approach can be particularly useful when the finger-detecting activity 401 relies upon a finger-detection technique that does not otherwise conflict with the stylus-detection technique.

Referring again to FIG. 3, at step 302 the control circuit 202 determines whether the tested interference result "I" exceeds an undue level of interference (this undue level being represented in FIG. 3 by the threshold value "I_{T}"). When false, this process 300 can provide for continuing to re-test the wireless communication path for interference per the arranged schedule.

When true, however, at step 303 the control circuit 202 instructs the stylus 102 to modify the wireless communication path 103 in order to attempt to avoid the detected interference. In this particular illustrative example the control circuit 202 can employ the aforementioned short-range wireless transmitter 203 to convey this instruction.

By one approach this instruction can comprise a signal for the stylus 102 to shift to another frequency of the stylus's own choosing. By another approach this instruction can comprise a signal for the stylus 102 to shift to another specific frequency such that the instruction identifies a particular transmission channel that the stylus 102 should use. The specific frequency itself can be wholly identified in the instruction or can be identified by, for example, a code that is known to both the control circuit 202 and the stylus 102 as corresponding to a particular frequency.

In the example of FIG. 3, and for the sake of a simple example, the control circuit 202 prompts the stylus 102 to use a different transmission frequency as soon as the tested interference proves to be too high. These teachings will accommodate variations in these regards, however. For example, and particularly when the control circuit 202 tests relatively often for interference, it may be required that a specific number of consecutive interference tests all indicate the presence of undue interference before the control circuit 202 will issue the described instruction to the stylus 102. Such an approach can help the apparatus 100 avoid responding with unnecessary sensitivity to only brief instances of interference.

So configured, such an apparatus can transparently and readily detect and respond to interfering signals in a way that can help to preserve the viable operability and utility of a stylus as an input mechanism. These teachings can be embodied in an economical manner and are readily usable with a wide variety of stylus-based platforms and methodologies.

The present disclosure may be embodied in other specific forms without departing from its essential characteristics. The described embodiments are to be considered in all respects only as illustrative and not restrictive. As one example in these regards, the apparatus 100 can employ one sensor to interact in ordinary course with the stylus in order to track the stylus's movement and employ another, separate sensor to test the wireless communication path for interference per these teachings.

The scope of the disclosure is, therefore, indicated by the appended claims rather than by the foregoing description. All changes that come within the meaning and range of equivalency of the claims are to be embraced within their scope.

## Claims

1. An apparatus comprising:
a stylus scribing surface (101);
a sensor (201) configured to communicate with a stylus (102) via a wireless communications path (103) regarding a location of the stylus with respect to the stylus scribing surface;
a control circuit (202) operably coupled to the sensor and configured to:
automatically test (301) the wireless communication path for interference;
instruct (303) the stylus to modify the wireless communication path in response to detecting (302) an undue level of the interference.

2. The apparatus of claim 1 wherein the stylus scribing surface comprises, at least in part, a display.

3. The apparatus of claim 1 wherein the control circuit is configured to automatically test the wireless communication path for interference during communication nulls for the stylus.

4. The apparatus of claim 3 wherein the control circuit is further configured to automatically test the wireless communication path for interference during the communication nulls for the stylus upon first concluding a quiescent-state window (601) that precedes the test.

5. The apparatus of claim 4 wherein the quiescent-state window immediately precedes the test.

6. The apparatus of claim 1 wherein the control circuit is configured to instruct the stylus to modify the wireless communication path via a short-range wireless transmission (204).

7. The apparatus of claim 6 wherein the short-range wireless transmission comprises a Bluetooth^{™}-compatible wireless transmission.

8. The apparatus of claim 1 wherein the control circuit is configured to instruct the stylus to modify the wireless communication path by, at least in part, identifying a particular transmission channel that the stylus should use.

9. The apparatus of claim 1 wherein the control circuit is configured to automatically test the wireless communication path for interference while simultaneously monitoring the stylus scribing surface for finger-based contact.

10. A method comprising:
at a control circuit (202) that operably couples to a sensor (201) that is configured to communicate with a stylus (102) via a wireless communications path (103) regarding location of the stylus with respect to a stylus scribing surface (101):
automatically testing (301) the wireless communication path for interference;
instructing (303) the stylus to modify the wireless communication path in response to detecting (302) an undue level of the interference.

11. The method of claim 10 wherein testing the wireless communication path for interference comprises, at least in part, testing the wireless communication path for interference during communication nulls for the stylus.

12. The method of claim 11 wherein testing the wireless communication path for interference during communication nulls for the stylus comprises, at least in part, first concluding a quiescent-state window that precedes the testing.

13. The method of claim 10 wherein instructing the stylus to modify the wireless communication path comprises, at least in part, transmitting at least one signal via a short-range wireless transmission (204) to the stylus.

14. The method of claim 10 wherein instructing the stylus to modify the wireless communication path comprises, at least in part, identifying a particular transmission channel that the stylus should use.

15. The method of claim 10 wherein automatically testing the wireless communication path for interference comprises, at least in part, automatically testing the wireless communication path for interference while simultaneously monitoring the stylus scribing surface for finger-based contact.
